# EUROPEAN PATENT APPLICATION

(11) **EP 4 574 228 A1**
(43) Date of publication of application: **25.06.2025**
(21) Application number: 24220258.8
(22) Date of filing: 16.12.2024
(51) Int. Cl.: B01D 29/15, B01D 29/90, B01D 36/00

(54) **FILTER ASSEMBLY**

(30) Priority: 19.12.2023 US 202318544587
(71) Applicant: Hamilton Sundstrand Corporation, Charlotte, NC 28217-4578 (US)
(72) Inventor: SLAYTER, Matthew Allen, Rockford, IL (US); SMITH, Randal J., Loves Park, IL (US)
(74) Representative: Dehns

(57) **Abstract**

A passive filter assembly (100) can include a filter bowl (102) configured to enclose a filter element (104) therein, a fluid inlet (106) in fluid communication with the filter bowl, a fluid outlet (108) in fluid communication with the filter bowl downstream of the fluid inlet, and a filter cap (110) disposed gravitationally below the filter bowl and configured to receive denser fluid components separated from a bulk fluid when the denser fluid components fall into the filter cap. The filter bowl can be shaped to allow the bulk fluid to swirl therein. The fluid inlet can be configured to cause the bulk fluid entering through the fluid inlet to swirl within the filter bowl to be centrifuged to separate one or more denser fluid components from the bulk fluid. The fluid outlet can be configured to receive a filtered flow downstream of a filter element.

## Description

### FIELD

This disclosure relates to filter assemblies.

### BACKGROUND

Gearbox and engine filters are designed to filter small particulate, but larger particulate causes backup within the filters (e.g., from coked fuel/oil). Coked oil causes an increased pressure drop across the filter which indicates that a filter needs replacement. This results in a shortened life of the filter.

Such conventional methods and systems have generally been considered satisfactory for their intended purpose. However, there is still a need in the art for extending filter life. The present disclosure provides a solution for this need.

### SUMMARY

A passive filter assembly can include a filter bowl configured to enclose a filter element therein, a fluid inlet in fluid communication with the filter bowl, a fluid outlet in fluid communication with the filter bowl downstream of the fluid inlet, and a filter cap disposed gravitationally below the filter bowl and configured to receive denser fluid components separated from a bulk fluid when the denser fluid components fall into the filter cap. The filter bowl can be shaped to allow the bulk fluid to swirl therein. The fluid inlet can be configured to cause the bulk fluid entering through the fluid inlet to swirl within the filter bowl to be centrifuged to separate one or more denser fluid components from the bulk fluid. The fluid outlet can be configured to receive a filtered flow downstream of a filter element.

In certain embodiments, the filter bowl can define a filter element volume and a swirl volume outward of the filter element volume configured to allow the bulk fluid to swirl around the filter element. The filter cap can further include a drain outlet at a bottom end of the filter cap for the removal of the denser fluid components.

In some embodiments, the fluid inlet can be configured to cause the bulk fluid to enter through the fluid inlet into the filter bowl at an angle with respect to an outer edge of the filter bowl. In other embodiments, the fluid inlet can be configured to cause the bulk fluid to enter through the fluid inlet into the filter bowl tangentially with respect to the outer edge of the filter bowl.

In certain embodiments, the filter element volume and the swirl volume can be configured to cause one or more denser fluid components to flow along an inner diameter of the filter bowl and less dense fluid to flow inwardly of the one or more denser fluid components. The filter element volume and the swirl volume can be configured to cause the less dense fluid flows through the filter element and out through the fluid outlet.

In certain embodiments, the filter cap can further include a funnel operatively connected to the filter bowl configured to guide the denser fluid components down towards a funnel opening and a lower chamber fluidly connected to the funnel via the funnel opening and configured to receive the denser fluid components that flow into the funnel and through the funnel opening. The lower chamber can be in fluid communication with the drain outlet.

In certain embodiments, when fluid flow is stopped, the denser fluid can fall from an inner diameter and/or the swirl volume of the filter bowl down the funnel through the funnel opening and into the lower chamber. A plug can be operatively associated with the drain outlet configured to prevent the denser fluid from leaking. The plug can be removable to allow for removal of the denser fluid components from the lower chamber.

In certain embodiments, the fluid inlet can include a curved shape. The curved shape of the fluid inlet can be configured to impart rotational momentum on the bulk fluid to induce swirl. The curved shape of the fluid inlet can be scroll shaped. In certain embodiments, the passive filter assembly can further include a filter element centrally located within the filter bowl.

In accordance with at least one aspect of this disclosure, a filter cap for a passive filter assembly can include a funnel gravitationally below a passive filter assembly configured to receive denser fluid components separated out from a bulk fluid and to guide the denser fluid components down through a funnel opening and a lower chamber gravitationally below the funnel. The denser fluid components can flow through the funnel opening into the lower chamber.

In certain embodiments, the filter cap can further include a drain outlet fluidly connected to the lower chamber configured for removing the denser fluid from the lower chamber. The filter cap can further include a removable plug operatively connected to the drain outlet and configured to prevent leakage of the denser fluid components in a closed position and configured to allow for removal of the denser fluid components in an open position.

In accordance with at least one aspect of this disclosure a method for passively separating coked fluid from incoming fluid can include providing bulk fluid flow to a passive filter assembly at angle thereby creating a centrifuge such that the coked fluid remains along an inner diameter of a passive filter assembly, and the cleaner less dense fluid flows towards a filter at the center of the passive filter assembly, shutting the fluid flow so that the coked fluid flows downward into a lower chamber of a filter cap and draining the coked fluid from the lower chamber.

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a side view in partial cross section of an embodiment of a filter assembly in accordance with this disclosure, showing a filter bowl, fluid inlet and outlet, and a filter cap;
Fig. 2 is a top view of the filter assembly of Fig. 1, showing a swirl volume and a filter element volume;
Fig. 3 is a side view in partial cross section of the filter assembly of Fig. 1, showing the filter bowl defined by an axis A;
Fig. 4 is a side view in partial cross section of the filter assembly of Fig. 1, showing bulk fluid entering the fluid inlet, and filtered fluid exiting the fluid outlet;
Fig. 5 is a top view of the filter assembly of Fig. 4, showing the bulk fluid being separated into denser and less dense fluid; and
Fig. 6 is a side view in partial cross section of the filter assembly of Fig. 4, showing the denser fluid exiting through the filter cap.

### DETAILED DESCRIPTION

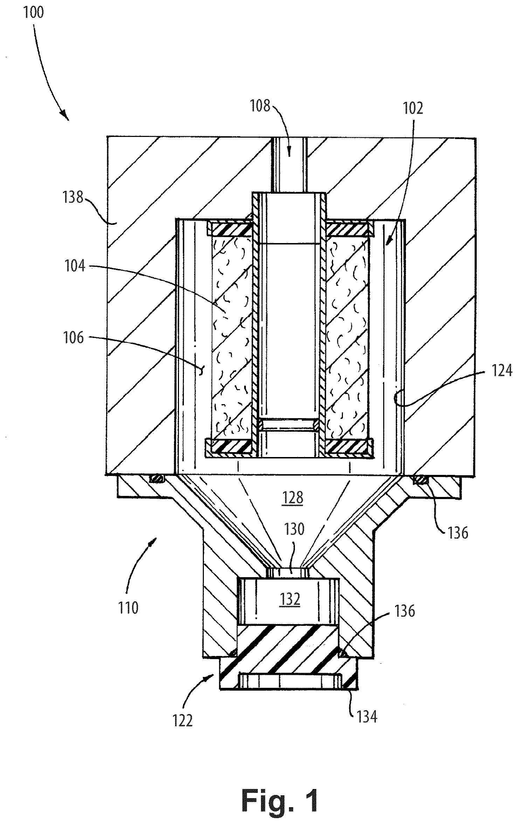

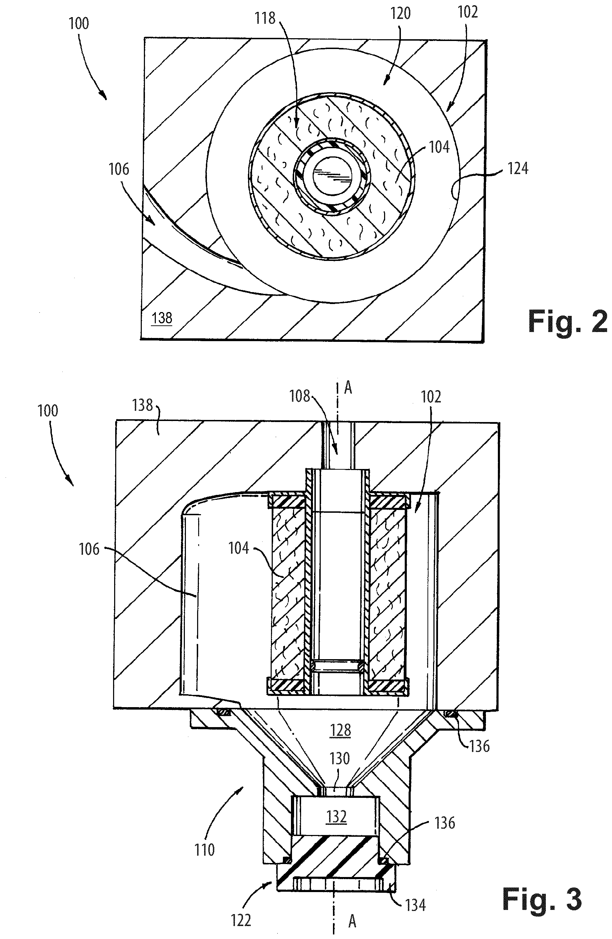

Reference will now be made to the drawings wherein like reference numerals identify similar structural features or aspects of the subject disclosure. For purposes of explanation and illustration, and not limitation, an illustrative view of an embodiment of a passive filter assembly in accordance with the disclosure is shown in Fig. 1 and is designated generally by reference character 100. Other embodiments and/or aspects of this disclosure are shown in Figs. 2-6.

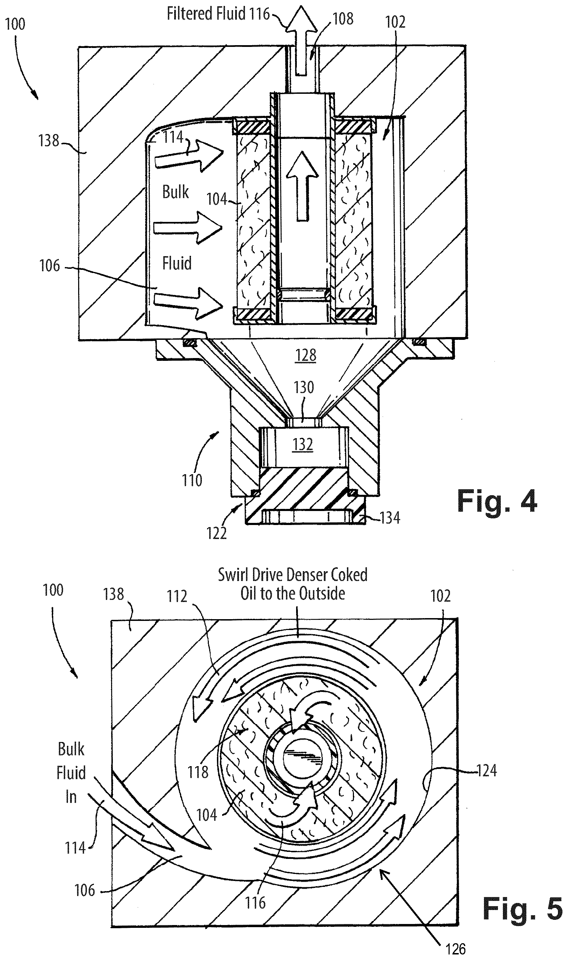

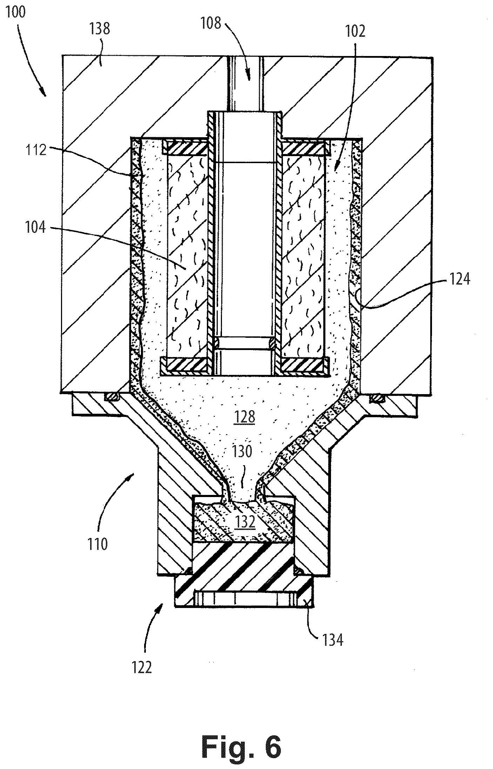

With reference to Fig. 1, passive filter assembly 100 can include a filter bowl 102 configured to enclose a filter element 104 therein, a fluid inlet 106 in fluid communication with the filter bowl 102, a fluid outlet 108 in fluid communication with the filter bowl 102 downstream of the fluid inlet 106, and a filter cap 110 disposed gravitationally below the filter bowl 102 and configured to receive denser fluid components (e.g., coked oil or fuel) 112 (e.g., as shown in Fig. 5) separated from a bulk fluid 114 (e.g., as shown in Fig. 4) when the denser fluid components 112 fall into the filter cap 110 (e.g., as shown in Fig. 6 for example, the denser fluid components 112 can fall into the filter cap 110 during shutdown or cessation of fluid flow between the fluid inlet and outlet). In addition to separating and removing coked oil/coked fluid, metallic chips and larger wear particles will be removed with the coked oil/coked fluid.

The filter bowl 102 can be formed by a core 138, e.g., as shown in Figs. 1-6, or any body which can be separated from or include the fluid inlet 106. Any other suitable components can be integral with the core 138 or be separated in any suitable manner. In certain embodiments, there can be more than one core. For example, there can be multiple cores entering tangentially. Any number of cores is contemplated herein. The number of cores can depend on package size and flow rate. In certain embodiments, the feed core does not have to be in a single plane but can be a helical flow feeding the top or bottom of the filter bowl and swirling the flow rotationally and axially.

The filter bowl 102 can be shaped to allow the bulk fluid 114 (e.g., fuel or oil) to swirl therein. For example, the bulk fluid 114 is configured to swirl around the filter element 104 so as to create a centrifuge around the filter element 104. The fluid inlet 106 can be configured (e.g., the shape of the inlet pathway and/or the angle of the hole/vector of the fluid entering is configured to cause the swirl) to cause the bulk fluid 114 entering through the fluid inlet 106 to swirl within the filter bowl 102 to be centrifuged to separate one or more denser fluid components 112 from the bulk fluid 114. The fluid outlet 108 can be configured to receive a filtered flow (e.g., being less dense/lighter than the denser fluid components) 116 (e.g., as shown in Fig. 4) downstream of a filter element 104.

With reference to Fig. 2, in certain embodiments, the filter bowl 102 can define a filter element volume 118 and a swirl volume 120 outward of the filter element volume 118 configured to allow the bulk fluid 114 to swirl around the filter element 104 (e.g., as shown in Fig. 5). With reference to Fig. 1, the filter cap 110 can further include a drain outlet 122 at a bottom end of the filter cap 110 for the removal of the denser fluid components 112.

In some embodiments, the fluid inlet 106 can be configured to cause the bulk fluid 114 to enter through the fluid inlet 106 into the filter bowl 102 at an angle with respect to an outer edge 124 of the filter bowl 102. In other embodiments, the fluid inlet 106 can be configured to cause the bulk fluid 114 to enter through the fluid inlet 106 into the filter bowl tangentially with respect to the outer edge 124 of the filter bowl 102. Any suitable swirl inducing a tangential component of flow is contemplated herein.

As shown in Fig. 3, the filter bowl 102 can define an axis A. Bulk fluid can enter the inlet 106 and swirl circumferentially around the axis A. The fluid inlet 106 can be angled so as to induce the swirl within the filter bowl 102. The passive filter assembly 100 can further include seals 136 (e.g., o-ring seals) to prevent leakage of the fluid.

With reference to Figs. 4 and 5, in certain embodiments, the filter element volume 118 and the swirl volume 120 can be configured to cause one or more denser fluid components 112 to flow along an inner diameter 126 of the filter bowl 102 and less dense fluid 116 to flow inwardly of the one or more denser fluid components 112. The filter element volume 118 and the swirl volume 120 can be configured to cause the less dense fluid 116 to flow through the filter element 104 and out through the fluid outlet 108 (e.g., as shown in Fig. 4).

In certain embodiments, the filter cap 110 can further include a funnel 128 operatively connected to the filter bowl 102 configured to guide the denser fluid components 112 down towards a funnel opening 130 and a lower chamber 132 fluidly connected to the funnel 128 via the funnel opening 130 and configured to receive the denser fluid components 112 that flow into the funnel 128 and through the funnel opening 130. The lower chamber 132 can be in fluid communication with the drain outlet 122.

As shown in Figs. 6, in certain embodiments, when fluid flow is stopped, the denser fluid components 112 can fall (e.g., as a result of gravity) from an inner diameter 126 and/or the swirl volume 120 of the filter bowl 102 down a funnel 128 through the funnel opening 130 and into a lower chamber 132. A plug 134 can be operatively associated with the drain outlet 122 configured to prevent the denser fluid 112 from leaking. The plug 134 can be removable to allow for removal of the denser fluid 112 components from the lower chamber 132. In certain embodiments, the plug can also be a plug for the whole system.

In certain embodiments, the fluid inlet 106 can include a curved shape. (e.g., to allow for reduced pressure drop from the centrifuge chamber). The curved shape of the fluid inlet 106 can be configured to impart rotational momentum on the bulk fluid 114 to induce swirl. The curved shape of the fluid inlet 106 can be scroll shaped. In certain embodiments, the passive filter assembly 100 can further include a filter element 104 centrally located within the filter bowl, such that the filter bowl 102 circumferentially surrounds the filter element 104. The filter bowl 102 can be cylindrical in shape or any other shape suitable that allows centrifuging.

In accordance with at least one aspect of this disclosure, a filter cap 110 for a passive filter assembly 100 can include a funnel 128 gravitationally below a passive filter assembly 100 configured to receive denser fluid components 112 separated out from a bulk fluid 114 and to guide the denser fluid components 112 down through a funnel opening 130 and a lower chamber 132 gravitationally below the funnel 128. The denser fluid components 112 can flow through the funnel opening 130 into the lower chamber 132.

In certain embodiments, the filter cap 110 can further include a drain outlet 122 fluidly connected to the lower chamber 132 configured for removing the denser fluid 112 from the lower chamber 132. The filter cap 110 can further include a removable plug 134 operatively connected to the drain outlet 122 and configured to prevent leakage of the denser fluid components 112 in a closed position and configured to allow for removal of the denser fluid components 112 in an open position.

In accordance with at least one aspect of this disclosure a method for passively separating coked fluid 112 from incoming fluid 114 can include providing bulk fluid 114 flow to a passive filter assembly 100 at angle thereby creating a centrifuge such that the coked fluid 112 remains along an inner diameter 126 of a passive filter assembly 100, and the cleaner less dense fluid 116 flows towards a filter 104 at the center of the passive filter assembly 100, shutting the fluid flow so that the coked fluid 112 flows downward into a lower chamber 132 of a filter cap 110 and draining the coked fluid 112 from the lower chamber 132.

The filter bowl and/or other components of the system can be sized (e.g., diameter of filter bowl, size of inlet and opening) to cause centrifuging of the bulk fluid at an operational pressure/flow rate. Certain embodiments can extend the filter life and reduce the number of maintenance intervals needed. Further, embodiments can reduce down time due to fewer maintenance needs. Certain embodiments can provide improved pressure in a circuit for longer amount of time. Embodiments can spend less time at reduced pressure, which can maintain performance. Embodiments can provide a reduction in cost.

Certain embodiments include a filter bowl arrangement fed by a scroll style core creating a swirl. The swirl can separate the coked oil from the un-coked. Proper shaping of the core can allow pressure losses to be controlled if not eliminated. The coked oil can be collected at shut down by gravity feed to a bottle. The un-coked continues through the filter as normal.

Embodiments can remove coked oil separately prior to entering the filter, life could be extended. Embodiments can provide extended filter life which reduces the number of maintenance intervals, reduced down time due to fewer maintenance cycles, and improved pressure in the circuit for longer time. Less time spent at reduced pressure maintains engine (e.g., aircraft engine) performance. Embodiments can ultimately result in a reduction in cost.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

Any suitable combination(s) of any disclosed embodiments and/or any suitable portion(s) thereof are contemplated herein as appreciated by those having ordinary skill in the art in view of this disclosure.

The embodiments of the present disclosure, as described above and shown in the drawings, provide for improvement in the art to which they pertain. While the subject disclosure includes reference to certain embodiments, those skilled in the art will readily appreciate that changes and/or modifications may be made thereto without departing from the scope of the invention as defined by the claims.

## Claims

1. A passive filter assembly, comprising:
a filter bowl (102) configured to enclose a filter element (104) therein, wherein the filter bowl is shaped to allow a bulk fluid to swirl therein;
a fluid inlet (106) in fluid communication with the filter bowl, wherein the fluid inlet is configured to cause the bulk fluid entering through the fluid inlet to swirl within the filter bowl to be centrifuged to separate one or more denser fluid components from the bulk fluid;
a fluid outlet (108) in fluid communication with the filter bowl downstream of the fluid inlet, the fluid outlet configured to receive a filtered flow downstream of a filter element; and
a filter cap (110) disposed gravitationally below the filter bowl and configured to receive the denser fluid components separated from the bulk fluid when the heavier fluid components fall into the filter cap.

2. The passive filter assembly of claim 1, wherein the filter bowl (102) defines a filter element volume (118) and a swirl volume (120) outward of the filter element volume configured to allow the bulk fluid to swirl around the filter element.

3. The passive filter assembly of claim 1 or 2, wherein the filter cap further (110) includes a drain outlet (122) at a bottom end of the filter cap for the removal of the denser fluid components.

4. The passive filter assembly of any preceding claim, wherein the fluid inlet (106) is configured to cause the bulk fluid to enter through the fluid inlet into the filter bowl at an angle with respect to an outer edge of the filter bowl, or wherein the fluid inlet is configured to cause the bulk fluid to enter through the fluid inlet into the filter bowl tangentially with respect to the outer edge of the filter bowl.

5. The filter system of claim 2, wherein the filter element volume (118) and the swirl volume (120) are configured to cause one or more denser fluid components to flow along an inner diameter of the filter bowl and less dense fluid to flow inwardly of the one or more denser fluid components, and optionally wherein the filter element volume and the swirl volume are configured to cause the less dense fluid flows through the filter element and out through the fluid outlet.

6. The passive filter assembly of claim 3, wherein the filter cap further includes:
a funnel (128) operatively connected to the filter bowl, wherein the funnel is configured to guide the denser fluid components down towards a funnel opening; and
a lower chamber (132) fluidly connected to the funnel via the funnel opening and configured to receive the denser fluid components that flow into the funnel and through the funnel opening.

7. The passive filter system of claim 6, wherein the lower chamber (132) is in fluid communication with the drain outlet (122).

8. The passive filter element of claim 7, wherein when fluid flow is stopped, the denser fluid falls from an inner diameter and/or the swirl volume (120) of the filter bowl (120) down the funnel (128) through the funnel opening and into the lower chamber (132).

9. The passive filter assembly of claim 8, further including a plug (134) operatively associated with the drain outlet configured to prevent the denser fluid from leaking, and optionally wherein the plug is removable to allow for removal of the denser fluid components from the lower chamber.

10. The passive filter system of any preceding claim, wherein the fluid inlet includes a curved shape, wherein the curved shape of the fluid inlet is configured to impart rotational momentum on the bulk fluid to induce swirl, and optionally wherein the curved shape of the fluid inlet is scroll shaped.

11. The passive filter system of any preceding claim, wherein the filter element is centrally located within the filter bowl.

12. A method for passively separating coked fluid from incoming fluid, comprising:
providing fluid flow to a passive filter assembly (100) at angle thereby creating a centrifuge such that the coked fluid remains along an inner diameter of a passive filter assembly, and the cleaner less dense fluid flows towards a filter at the center of the passive filter assembly;
shutting the fluid flow so that the coked fluid flows downward into a lower chamber (132) of a filter cap (110); and
draining the coked fluid from the lower chamber.

13. A filter cap for a passive filter assembly, comprising:
a funnel (128) gravitationally below a passive filter assembly configured to receive denser fluid components separated out from a bulk fluid and to guide the denser fluid components down through a funnel opening; and
a lower chamber (132) gravitationally below the funnel, wherein the denser fluid components flow through the funnel opening into the lower chamber.

14. The filter cap of claim 13, further including a drain outlet (122) fluidly connected to the lower chamber configured for removing the denser fluid from the lower chamber.

15. The filter cap of claim 14, further including a removable plug (134) operatively connected to the drain outlet and configured to prevent leakage of the denser fluid components in a closed position and configured to allow for removal of the denser fluid components in an open position.
